# EUROPEAN PATENT SPECIFICATION

(11) **EP 3 579 211 B1**
(45) Date of publication and mention of the grant of the patent: **16.08.2023**
(21) Application number: 18176300.4
(22) Date of filing: 06.06.2018
(51) Int. Cl.: B60W 60/00, G08G 1/16, B60W 30/095

(54) **METHOD AND VEHICLE FOR ASSISTING AN OPERATOR OF AN EGO-VEHICLE IN CONTROLLING THE EGO-VEHICLE BY DETERMINING A FUTURE BEHAVIOR AND AN ASSOCIATED TRAJECTORY FOR THE EGO-VEHICLE**
VERFAHREN UND FAHRZEUG ZUR UNTERSTÜTZUNG EINES BETREIBERS EINES EGO-FAHRZEUGS BEI DER STEUERUNG DES EGO-FAHRZEUGS DURCH BESTIMMUNG EINES ZUKÜNFTIGEN VERHALTENS UND EINER DAMIT VERBUNDENEN BAHN FÜR DAS EGO-FAHRZEUG
PROCÉDÉ ET VÉHICULE POUR AIDER UN OPÉRATEUR D'UN EGO-VÉHICULE À CONTRÔLER CE VÉHICULE EN DÉTERMINANT UN COMPORTEMENT FUTUR ET UNE TRAJECTOIRE ASSOCIÉE POUR L'EGO-VÉHICULE

(43) Date of publication of application: 11.12.2019
(73) Proprietor: Honda Research Institute Europe GmbH, 63073 Offenbach/Main (DE)
(72) Inventor: Weisswange, Thomas H., 63073 Offenbach am Main (DE); Rebhan, Sven, 63073 Offenbach am Main (DE); Schmuedderich, Jens, 63073 Offenbach am Main (DE)
(74) Representative: Beder, Jens

(56) References cited:
- EP-A1- 2 950 294
- EP-B1- 2 473 388
- US-A1- 2013 253 815

## Description

The invention generally relates to driver assistance systems which assist a vehicle operator in operating the vehicle and in particular in determining a suitable behavior and trajectory for the vehicle operated by the operator.

Over the last years driver assistance systems became more and more popular. On the one side, processors with an increased performance became available so that evaluation of a large amount of information became possible. On the other side, the need for such assistance systems also increased, because of an increase in traffic density. First approaches of assistance systems were rather limited, because they did not provide any intelligence with respect to situation analysis. Early systems for example were only capable to execute for example simple cruise control by maintaining a constant velocity of the vehicle. Then, the next generation was already capable to autonomously adapt the velocity of the vehicle. But the intention of such systems was rather to increase driver comfort than to increase traffic safety. The adaptation of the velocity of the vehicle was based only on distance measurements with respect to the preceding vehicle and relative to its own velocity. But in many situations an adaptation of the behavior of the vehicle should rather be adapted to an entire traffic situation. These situations may in particular include a plurality of vehicles of all involved in the same traffic situation and for example executing lane changes simultaneously.

Considering a situation on a highway, it is evident that an increasing amount of vehicles participating in the traffic situation of course increase complexity of the situation to be analyzed. In order to alleviate the driver's burden, lane-change assistance systems were introduced. These lane-change assistance systems take over a part of the driver's operation or observation duties by, for example, adjusting the longitudinal acceleration of a vehicle so that the vehicle best fits into the gap on a target lane. Such a system is described in EP 1 607 264 A1, but it requires that the driver of the vehicle commands a lane change. Thus, the effect with respect to safety is very limited. The burden of observing the entire surrounding traffic and making a decision whether to change a lane still lies with the driver.

Similarly, EP 3 261 892 A1 also uses driver initiated lane change requests and checks for the feasibility of a lane change given the surrounding traffic and initiates a maneuver, when this is positive. But again, the assistance of the system is not done autonomously but only in response to a driver operation or a driver command. Thus, there is still the need of improving assistance systems so that even in complex situations, the system will be capable to determine a behavior to be performed and an associated trajectory of the vehicle that takes into consideration the entire traffic situation.

Taking into consideration the entire traffic situation does also include an interaction between the behavior of the ego-vehicle and its consequences on the behavior of other traffic participants. US 20150194055 A1 goes one step further. Here a traffic flow assistant was suggested that recommends lane changes based on predicted future situations. It discloses to optimize the strategy for behavior of a traffic participant and in order to do so it includes multiple aspects of driving the vehicle. But still it takes only account of a behavior optimization but does not consider trajectory planning and the influence that different trajectories have on the behavior of other traffic participants in the environment of an ego vehicle. The trajectory itself can only be planned after a decision for a specific behavior has been taken already.

EP 2 942 765 A1 describes to generate an information signal whether or not driving on a neighboring lane would fit better to the current driving situation of the ego-vehicle. The behavior of another vehicle driving in an adjacent lane is predicted. It is determined whether this other vehicle opens up a fitting gap so that the ego-vehicle can perform a lane change maneuver. The prediction of the other vehicle's behavior does not take into consideration the ego-vehicle's behavior.

US 2013/0253815 A1 discloses a method for assisting an operator of an ego-vehicle in controlling the ego-vehicle by determining a future behavior and an associated trajectory for the ego-vehicle to be executed, wherein the future behavior of the ego-vehicle and a future behavior of another vehicle are predicted, a plurality of trajectories are generated for the ego-vehicle and the other vehicle and a trajectory for the ego-vehicle is determined by evaluating the collision probabilities and the dynamic profiles of the trajectories.

It is an object of the present invention to improve driver assistance systems in particular for highway driving, where planning of lane changes, following a preceding car and the like has to be made. This object is achieved by the inventive method according to claim 1 and according to claim 19 configured to carry out the method for assisting an operator of a vehicle.

The method for assisting an operator of an ego-vehicle in controlling the ego-vehicle by determining a future behavior and an associated trajectory for the ego-vehicle to be executed at first determines a situation currently encountered by the ego-vehicle to obtain, for the current situation comprising the ego-vehicle and at least one other vehicle, a description of a state of a local traffic environment covering existence, position, lane and speed of the ego-vehicle and the at least one other vehicle. Then, different future behaviors of the ego-vehicle that could be performed for the current situation are determined, wherein the future behaviors of the ego-vehicle are at least two of: lane change to the left, lane change to the right and lane following. Further, future behaviors of the at least one other vehicle are predicted by computing probabilities of future behaviors of the at least one other vehicle for the current situation based on the description, wherein the computation of the probabilities of the future behaviors of the at least one other vehicle is performed once with the assumption of each possible future behavior of the ego-vehicle. Based on combinations of the predicted future behaviors of the at least one other vehicle and the determined different future behaviors of the ego-vehicle, probabilities of a plurality of future situations possibly evolving from the current situation are calculated, wherein each future situation corresponds to the state of the local traffic environment covering the existence, the position, the lane and the speed of the ego-vehicle and the at least one other vehicle, after each of the ego-vehicle and the at least one other vehicle performed its behaviour. Additionally, for each future situation, a trajectory for the ego-vehicle is optimized with respect to driving parameters related to safety and comfort to generate a plurality of optimized trajectories. Then, a trajectory is selected from the plurality of optimized trajectories based on the future situation probabilities and an evaluation of the plurality of optimized trajectories . Since each optimized trajectory is associated with one of the different future behaviors of the ego-vehicle, this selection of a trajectrory also means a selection of a particular behavior. Finally, a control signal to output information to the driver about the selected trajectory and/or to control actuators of the ego-vehicle so that the ego-vehicle follows the selected trajectory is generated.

Then invention has the big advantage that the future behaviour of the ego-vehicle and the associated trajectory are not calculated independently and step-by-step, but the final decision is made based on an optimized trajectory for a situation which is based on a particular behaviour of the ego-vehicle. The inventive methods takes into account the plurality of future situations that all may evolve from the current situation thereby considering different possible behaviors of the other vehicles, because the future situations are determined from combinations of behaviors of the ego-vehicle and the other vehicles. These combinations result in probabilities that are determined for the future situations. The final decision to select a specific trajectory is thus based not only on an initially determined behavior but takes account of different ways how traffic situations may develop.

The computation of the probabilities of future behaviors of the at least one other vehicle is performed once with the assumption of each possible future behavior of the ego-vehicle. Consequently, all behaviors that can be performed by the ego-vehicle starting from the current situation are considered when the best behaviour and trajectory are determined.

The computation of the probability of a future behavior of the at least one other vehicle takes into account the current situation of this vehicle including its own state, the state of its surrounding vehicles and may additionally take into account the traffic rules currently applicable to it. The behavior of relevant vehicles is predicted using one or a combination of one or multiple context-based prediction methods and one or multiple physics-based prediction methods. These prediction methods per se are known already from the prior art.

The method according to the invention is performed by a vehicle including at least one sensor for sensing an environment of the vehicle and a processor configured to carry out the method steps as detailed above. The control signal is output to a human machine interface for communicating the selected behavior and associated trajectory to the vehicle operator and/or to one or more controllers of vehicle actuators to operate the vehicle to follow the selected trajectory.

Advantageous aspects are defined in the dependent claims.

According to one preferred aspect, the computation of the probabilities of the future behaviors of the at least one other vehicle takes into account potential future changes of the behavior of its surrounding vehicles. Thus, the influence on decisions on the behavior that might be caused by the surrounding vehicles is considered when selecting a preferred trajectory and behavior.

The computation of the probabilities of the future behaviors of the at least one other vehicle taking account of possible future behaviors of its surrounding vehicles may be done by changing the current situation for its surrounding vehicles in a way that simulates the execution of the possible behaviors by its surrounding vehicles. This can be achieved either by representing a default trajectory for this behavior or by updating the parameters of the vehicle, like position, lane, speed and so on, to represent the state after performing such a behavior. The timing of the predicted behavior of relevant vehicles can be derived from contribution of different prediction algorithms in that sense that for example purely context-based prediction is indicative for a behavior in the near future (the behavior did not yet start) and physical prediction is indicative for already started, imminent behavior.

The predicted behavior of the at least one other vehicle and the future behavior of the ego-vehicle is in particular one of: lane change to the left, lane change to the right, driving straight, braking, accelerating. Such behaviors are typical for highway driving where the inventive method and system are specifically advantageous, because the influence of the behavior of one vehicle on others is strong.

Each future situation that is constructed corresponds to a unique combination of future behaviors of the other vehicle(s) and one of the different future behaviors of the ego-vehicle. This approach has the advantage that for each possible combination of behaviors of any one of the involved vehicles one distinct situation is constructed. Consequently, all future situations that may possibly evolve from the current situation are considered when the best trajectory is selected in the end.

For constructing relevant future situations, it is preferred to combine related future behaviors of other vehicles in the vicinity of the ego-vehicle with each other and with potential future behaviors of the ego-vehicle. Using only related future behaviors of the other vehicles in the vicinity of the ego vehicle has on the other side the advantage that the number of situations that thereafter need to be further processed is reduced and computational effort is reduced. The effect on the result is small, because only behaviors of other vehicles that do not interact with the situation that influences the behavior of the ego-vehicle are not considered.

For further reduction of the number of situations that need further processing, only behaviors of the other vehicles and/or the ego-vehicle are considered for construction of the future situations, that are applicable in the current situation and that comply with applicable traffic rules. This excludes behaviors from consideration that cannot realistically be expected due to constraints to the overall traffic situation.

Additionally, for constructing relevant future situations, each potential behavior of the ego-vehicle is combined only with predicted behaviors of other vehicles in the vicinity of the ego-vehicle and conditioned on the respective potential behavior of the ego-vehicle. Again, this results in a reduction of the overall number of situations which are then further processed in order to calculate the best possible trajectory and associated behavior.

One advantageous way to calculate the probability for a future situation is multiplying the probabilities and/or conditional probabilities of the associated future behaviors of every vehicle. Doing so makes sure that the individual probabilities are taken into account so that for example the overall probability for a situation is reduced in case that one of the probabilities of an involved behavior of one of the vehicles is rather low.

A further reduction may be achieved when future situations that only differ in states of vehicles that do not influence the related ego-vehicle behavior are fused so that they may be further processed as one single future situation.

According to another aspect, a parameter space of parameters defining possible trajectories which implement the situation-associated ego-vehicle behavior is evaluated with respect to cost and/or quality, and the trajectory that results in minimum cost or maximum quality is selected as optimized trajectory. The cost of the ego-vehicle's trajectory is defined by a combination of cost-terms influenced by control points that represent parameters to be optimized.

To further reduce the computational cost, the optimization of the trajectories is done only within limits for the trajectory that are defined by at least one of a regulation according to ISO 15622 and vehicle dynamics safety bound.

Advantageously, the trajectories are optimized by determining values for the control points using an optimization algorithm, which preferably is a derivative-free gradient descent method. Using such optimization algorithm ensures that the optimization process is not static and can deliver suitable results for all current situations in which the selection of a trajectory and behavior is necessary to assist the operator of the ego-vehicle.

For conducting the optimization it is to be noted that a given situation is represented by trajectories of all relevant vehicles according to their behavior associated to this given situation. A trajectory may in particular be represented as a cubic-C2-spline. The vehicle motion may be abstracted by at least one lateral and at least one longitudinal control value. These control values may be characterized by times for lane-change start which is the start of a lateral motion relative to the lane-boundary, passing a reference point during the lane-change, for example a lane-boundary, lane-change end, which is the end of a lateral motion relative to the lane-boundary, or a slope of lateral motion, which is the derivative of lateral position with respect to longitudinal position. The control values may also be characterized by time or acceleration as well as derivative of acceleration with respect to time at that time. The latter is a measure for so-called jerk.

Of course, it is not necessary that all of these control values are considered when performing the optimization of the trajectory. It is also possible to set a control value to a fixed value based on either one of a predefined value representing a desired state, for example final orientation to a lane or a final acceleration, known parameters derived from physics or vehicle dynamics, known parameters from regulations or law, observed parameters by analyzing data recorded during usual driving patterns, observed parameters by analyzing data recorded during driving of the ego-vehicle driver, measured values of the ego-vehicle, for example current acceleration, steering wheel angle or orientation to the lane, or any combination thereof.

The cost of the ego-vehicle's trajectory is characterized by a combination of cost-terms influence by the control points. The cost-terms may in particular be characterized by anyone of: deviation of the ego-vehicle acceleration with respect to time, acceleration/deceleration of the ego-vehicle, velocity of the ego-vehicle with respect to a velocity limit either set by the user, derived from traffic rules or law, or determined by the system, for example regarding weather condition, traffic density, velocities of other vehicles, observed driver behavior or others. Further, the cost-terms may be characterized by a relation to other relevant vehicles characterized by for example time gap which is a distance relative to the ego-vehicle speed or time-to-collision, which is the distance relative to the relative velocity. The cost-terms may also be weighted with the relative velocity, lateral distance, longitudinal distance of a relevant vehicle with respect to the ego-vehicle or a combination thereof. It is also possible to perform the weighting non-linearly using a non-linear function of one or more cost-terms being calculated as e^{k(x-x')}. In this formula k is a constant factor, x ist the cost-term value and x' is a predefined target value. Alternatively or additionally, the cost-terms may be a measure for a requirement for a reaction of other relevant vehicles with respect to the ego-vehicle, wherein such reaction may be characterized by a required acceleration to avoid a crash or keep a safety distance. Another example for a cost-term is timing of an ego-vehicle lane-change which is characterized by for example a time-to-contact to a preceding vehicle, or time gap to a preceding vehicle. The cost-term parameters might be evaluated at a given time during the trajectory, integrated over the whole duration, or as any other combination of the values as an maximum overtime or mean.

The combination of cost-terms may be a weighted sum, wherein in particular the weight for a cost-term is based on a user-setting or environmental conditions such as weather conditions, road conditions or traffic density.

Advantageously, the optimization process for determining an optimized trajectory is sequentially done for each constructed situation according to a predefined order of the situations until a stop criterion is reached. The order of the constructed future situations can in particular be established based on: probability, number of vehicles changing their behavior, closest distance of the vehicle to the ego-vehicle and so on. Examples for a stop criterion are: reaching a fixed amount of computing time or when a trajectory with a certain quality/cost is found.

The selection of a trajectory and a respective behavior is based on at least two of: future situation probability, trajectory cost, traffic rules, driver preferences. Using at least two different aspects has the advantage that a more global approach for finding the best trajectory is used.

According to another advantageous aspect, the control signal is output only if the selected trajectory and associated behavior has cost not exceeding a threshold and/or the selected trajectory and associated behaviour lies within given constraints.

Before the inventive method and vehicle will be described with respect to the annexed drawings some definitions relevant for the understanding of the present invention shall be given:
Behavior: a high-level description of the current class of movements that a vehicle is performing, e.g. lane change, lane following, slowing down, accelerating, and so on.
Situation: description of the state of the local traffic environment, covering existence, position, lane, speed and future behaviors/trajectories of vehicles including the ego-vehicle. A future situation describes the same parameters, after each vehicle performed its behavior (i.e. a vehicle drives on a new lane or drives at higher speeds).
Conditional prediction: probability of an event given another event, here probability of future behavior given a specific situation.
Trajectory: time-series of a given length of values of a parameter that influences the motion of the vehicle, here e.g. acceleration, velocity, lateral shift, steering wheel angle, and so on.
Cost (/quality): value that provides the relative evaluation of how negative (/positive) a certain parameter or parameter set (here a trajectory choice) influences the vehicle/driver/surrounding traffic (i.e. with respect to comfort, safety, utility, etc.).
Optimal trajectory: the trajectory that creates the minimum cost value/best quality for a given situation.
Relevance: a situation is considered relevant for a given ego-vehicle behavior if it affects directly or indirectly the future ego-vehicle behavior or trajectory. Directly means that the ego-vehicle will have to react to a particular instance of the situation (e.g. slow down for a vehicle on the same lane, overtake it, etc.). Indirectly means that the situation will lead to another, new situation and this new situation will directly affect the ego-vehicle (e.g. a faster vehicle on the neighboring lane approaching a slower vehicle on the same neighboring lane indirectly affects by cutting-in at a later time and forcing the ego-vehicle to react to it).

Aspects and features of the present invention will now be explained with reference to the annexed drawings in which:
Figure 1 shows a flowchart illustrating the main method steps of the inventive method;
Figure 2 shows a block diagram of an inventive vehicle configured to carry out the inventive method;
Figure 3 shows a plurality of future situations to explain prediction of future situations according to the invention;
Figure 4 shows a simplified example for illustrating the optimal trajectories and their costs computed for three exemplary situations; and
Fig. 5 illustrates the process of trajectory optimization using control points.

In order to improve understanding of the present invention, the invention is explained with respect to highway situations only. Nevertheless, it is evident that the invention may also be applied to a plurality of other situations and the invention is consequently not limited to lane change situations. All the examples that will be explained herein below however, assume that (partial) automated highway driving is performed which controls longitudinal and lateral vehicle motion. Longitudinal motion includes acceleration and/or velocity of the vehicle and lateral vehicle motion includes lane changes.

For controlling an ego-vehicle in highway situations it is necessary to decide on two control levels. On the one hand a particular behavior which is suitable to handle the currently experienced situation needs to be selected, for example a lane change to the left/right, accelerating the ego-vehicle, decelerating the ego-vehicle or cruise. Of course, the behavior has to be selected with respect to the given and currently encountered situation. But more than that, in addition to the behavior a trajectory which defines the way how the behavior will be executed needs to be selected. This means, that the selected trajectory implements the behavior best for a given situation. The trajectory has to define acceleration/velocity over time and steering/lateral offset over time. According to the invention, these decisions are not made independently from each other but in a combined process. The decisions are influenced by the current layout of the traffic situation that includes positions of other vehicles and lane layout.

The common decision which finally selects one particular trajectory associated with one specific behavior also considers possible future changes, future changing behaviors, e.g. lane changes of other traffic participants.

The probability that a particular behavior is performed by one of the other traffic participants depends on their local situation but also on a future behavior of the ego-vehicle. Thus, the probability for a particular behavior of one of the other traffic participants is conditional on the future ego-vehicle behavior. Generally, the calculation of probability of any behavior is known in the prior art. Thus, for the sake of conciseness no details on probability calculation need to be given here.

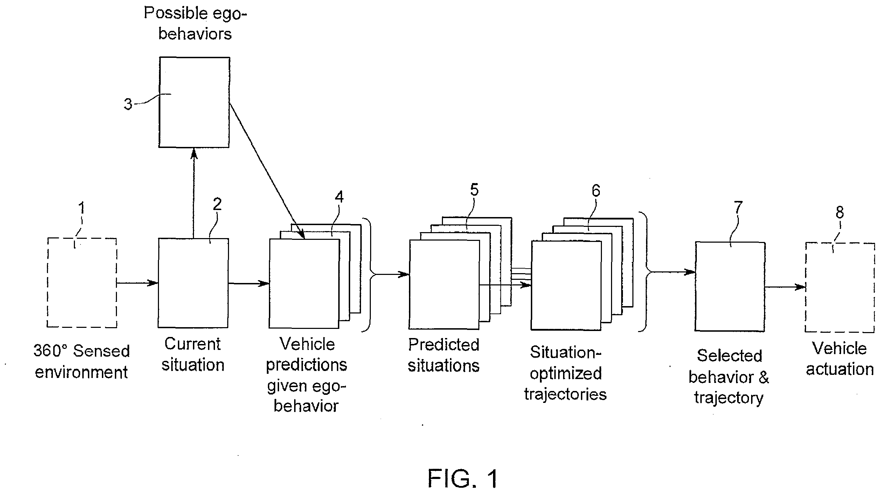

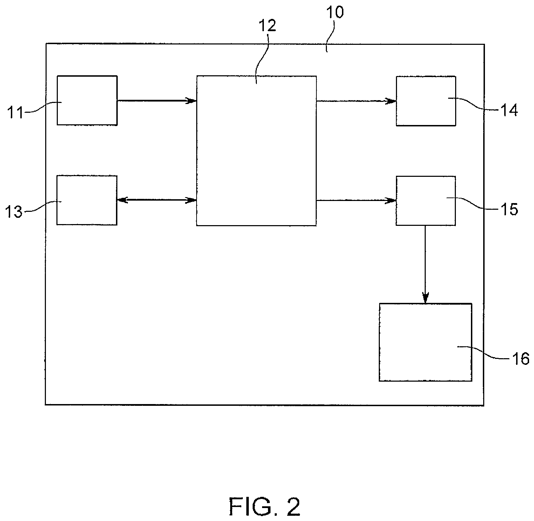

The main method steps will now be explained with respect to figure 1 and figure 2.

Starting from the currently experienced traffic situation the plurality of different future situations may evolve. So in order to start the method it is first necessary to determine currently experienced situation. In the given example the vehicle is equipped with at least one sensor 11 in order to sense the environment of the ego-vehicle. Such sensor might be for example a camera, LIDAR, RADAR, car2car/car2infrastructure communication, ultrasonic sensor or a combination thereof. As mentioned in step S1 using these sensors preferably 360° of the environment of the ego-vehicle are observed. The information of the sensed environment is then forwarded to the processor 12 mounted on the vehicle 10 in which the now following method steps are executed.

In the processor 12 at first representation of the current situation is generated as illustrated in step S2. Starting from this representation of the current situation potential ego-vehicle behaviors are determined in step S3.

Then, based on the current situation and taking into consideration the potential ego-vehicle behaviors conditional prediction for the other traffic participants is performed in step S4 Thus, a set of predicted future behaviors for the other vehicles is generated.

The number of possible situations that may be constructed as shown in step S5 equals the number of possible combinations of different future behaviors of all participating vehicles including the ego-vehicle. Of course, depending on the different probabilities of individual future behaviors of the other vehicles and the ego-vehicle, the probability that one particular future traffic situation will occur will differ. When constructing the future situations it may of course be already considered that some potential future behaviors of the ego-vehicle or any one of the other vehicles may not occur, because traffic rules might restrict/recommend a particular behavior. Examples might be overtaking prohibition, moving to rightmost lane when no slow vehicles are in front, etc. Although such behaviors might potentially be executed, they may be neglected for constructing (predicting) the future situations in step S5.

Starting from this number of constructed future situations, the number of situations taken into consideration for further processing can be reduced by filtering the situations before a trajectory optimization is performed in step S6. Such filtering may be based on relevance for a given ego-vehicle behavior. The conditions for filtering may be stored in a memory 13 of the system and based on a comparison of the currently encountered traffic situation with prototypical situations stored in the memory 13, filtering may be performed. For example in case that the ego-vehicle drives straight on its own lane, it is not relevant if another vehicle preceding the ego vehicle but on the left lane drives straight or changes the lane to its left and the respective predicted situation can be ignored for further processing. Even breaking of this other vehicle does not influence the driving of the ego-vehicle. Apart from not considering such situations that are predefined, it is also possible to not consider situations which have a probability below a threshold that may be set when setting up the system. This results in considering only future situations that realistically might be considered to occur in the future of the currently encountered traffic situation.

For each of the remaining future situations an optimized ego-vehicle trajectory is then determined in step S6. The determination is based on the fact that each trajectory may provide a certain quality/cost with respect to safety, comfort, etc. and will be explained with greater detail below.

It is to be noted that the different potential behaviors of the ego-vehicle are considered by constructing a number of predicted future situations and that for each of the remaining predicted future situations optimized trajectory is determined. Consequently, when an optimized trajectory is selected in the end, automatically also a corresponding behavior which was the basis for the situation for which the optimized trajectory is determined, is selected. Thus, after optimizing the trajectories for each ego-vehicle behavior of any of the remaining situations one trajectory is selected which simultaneously includes selection of the respective behavior. This is illustrated in the simplified flowchart in step S7.

Based on the selected trajectory and behavior the processor 12 generates a control signal which is then output either to a human machine interface 14 or to controllers 15 for controlling actuators 16 of the vehicle 10. When the control signal is output of the human machine interface 14 it is possible to inform the driver of a trajectory and behavior that needs to be performed in the current situation in order to optimally further operate the vehicle 10. On the other side in case of automated driving the controllers 1 receive the control signal and based on the control signal actuators 16 of the vehicle 10 operated autonomously. Such actuators 16 may be for example the brake system, the accelerator pedal, the steering but also indication lights. In figure 1 only the vehicle activation is illustrated in step S8 as an example for making use of the control signal generated by the processor 13. It is also possible to activate only part of the trajectory, e.g. the longitudinal acceleration while the optimal lateral trajectory is communicated to the driver via HMI.

For selecting a trajectory and respective behavior of the ego-vehicle an optimization is performed in step S6. During this optimization a trajectory is created for each relevant vehicle and each remaining future situation. The trajectory represents the expected behavior in both lateral as well is longitudinal direction. The behavior in the lateral direction for example defines whether the vehicle drives straight, changes the lane to the left or changes the lane to the right. The behavior in the longitudinal direction for example includes an acceleration or deceleration profile. The path and acceleration profile can be represented as piecewise linear representations, polynomials of third order or higher, splines based on third order polynomials or higher, for example C2-splines, B-splines or the like. It is also possible to use any other function linking time with acceleration and longitudinal with lateral position. Based on the ego-vehicle behavior in specific future situations an initial trajectory for the ego-vehicle is created. This initial trajectory can be one of the representations as mentioned above and can be modified by control points representing optimization parameters including anyone of the following:
- For lateral motion any of: times for lane-change start (lateral motion relative to the lane-boundary starts), passing reference point during the lane-change (e.g. lane-boundary), lane-change end (lateral motion relative to the lane-boundary ends) as well as slope of lateral motion (derivative of lateral position with respect to longitudinal position)
- for longitudinal motion one or more points containing time, acceleration as well as derivative of acceleration with respect to time (i.e. jerk) at that time

In the most general approach all trajectory parameters can be used for optimizing the trajectory. But it is also possible to keep anyone of the trajectory parameters fixed or limited to a certain range, or calculating the parameters relative to one or more other parameters. The fixed values, limits and factors might be derived using:
- Parameters set to a fixedly defined value representing a desired state (e.g. final orientation to the lane, final acceleration)
- known parameters derived from physics of vehicle dynamics
- known parameters from regulations or law
- observed parameters by analyzing data recorded during usual driving patterns
- observed parameters by analyzing data recorded during driving of the ego-vehicle driver
- parameters measured from the ego-vehicle (e.g. current acceleration, steering wheel angle, orientation to the lane)

Based on the future situation currently considered (and thus the trajectories of the relevant vehicle) the parameters of the ego-vehicle trajectory are optimized taking into account at least one of the following terms:
- the deviation of the ego-vehicle acceleration with respect to time (jerk)
- the acceleration/deceleration of the ego-vehicle
- the velocity of the ego-vehicle with respect to a velocity limit either set by the user, derived from traffic rules or law are determined by the system e.g. regarding weather condition, traffic density, velocities of other vehicles, observed driver behavior or others
- the relation to other relevant vehicles characterized by e.g. the time gap (distance/ego-vehicle speed) or time-to-collision (distance/relative velocity) optionally (non-linearly) weighted with the relative velocity, real distance, longitudinal distance or a combination thereof
- the required reaction of the other relevant vehicles with respect to the ego-vehicle under investigation characterized by e.g. required acceleration to avoid a crash or keep a safety distance
- timing of a ego-vehicle lane-change characterized e.g. by the time-to-contact to the proceeding vehicle, time gap to the proceeding vehicle.

One more of the above cost-terms are combined to the cost by e.g. a weighted sum or a non-linear combination. Optionally terms for limiting the ego-vehicle trajectory can be used according to regulation such as ISO 15622 (e.g. maximum acceleration/deceleration, maximum jerk) as well as vehicle dynamics safety bound (e.g. lateral acceleration), etc. Based on the combined cost and optionally obeying the limit terms above, the parameters of the ego-vehicles trajectory are optimized using e.g. a gradient descent are derivative-free gradient descent methods (e.g.COBYLA, BOBYQA, SLSQP), evolutionary optimization, random or structured sampling, etc.

After having optimized the trajectories of the vehicles for each of the situations, a trajectory and respective behavior taking into account future situation probabilities, trajectory cost and traffic rules are selected. This final selection of behavior and trajectory can be done for example by:
- selecting a behavior and trajectory with highest quality (/lowest cost)
- selecting a trajectory with highest quality (/lowest cost) for the behavior chosen in the previous time step, if cost is smaller than a threshold
- selecting a trajectory with highest quality (/lowest cost) for a fixed behavior (which is for example selected by a driver)
- for each possible ego behavior, selecting a most probable situation with corresponding optimal trajectory, and then
   - selecting a behavior with highest situation probability (preferring behavior with high certainty of future situation)
   - selecting a behavior with the highest trajectory-associated quality (/lowest cost)
   - selecting a behavior according to traffic rules for a given situation (e.g. change right if right lane will be free of slower vehicles), but this behavior might be selected only if cost is lower than a predetermined threshold
   - among behaviors with similar trajectory-associated quality, select according to predefined order (e.g. driving "straight" preferred to "right" preferred to "left")
   - selecting a behavior, whose associated trajectory is superior with respect to certain sub- parameters of the quality/cost function (e.g. highest speed, lowest acceleration, highest safety)
- selecting a behavior and trajectory that is most robust with respect to alternative situations with same ego behavior (i.e. has lowest average/median/maximum cost for alternative situations)
- selecting a behavior and trajectory that provide lowest risk with respect to alternative situations with the same ego behavior (i.e. that have lowest weighted sum of cost for these alternative situations, where the weights are determined by the probability of the alternative situation
- among those behavior and trajectories which have a probability that is greater than the threshold and cost is smaller than a threshold, selecting a behavior and trajectory where the situation involves the smallest number of other traffic participants to change behavior
- under a given condition (e.g. motion, start of breaking), keep previous behavior and trajectory, unless cost in most probable related situations becomes greater than a threshold

Finally, it is to be noted that in case that the selected behavior and trajectory would generate cost higher than a threshold, the automatic control can be cancelled and in that case the control signal is only output to the human machine interface 14 so that based on the respective control signal the operator of the vehicle can be informed respectively.

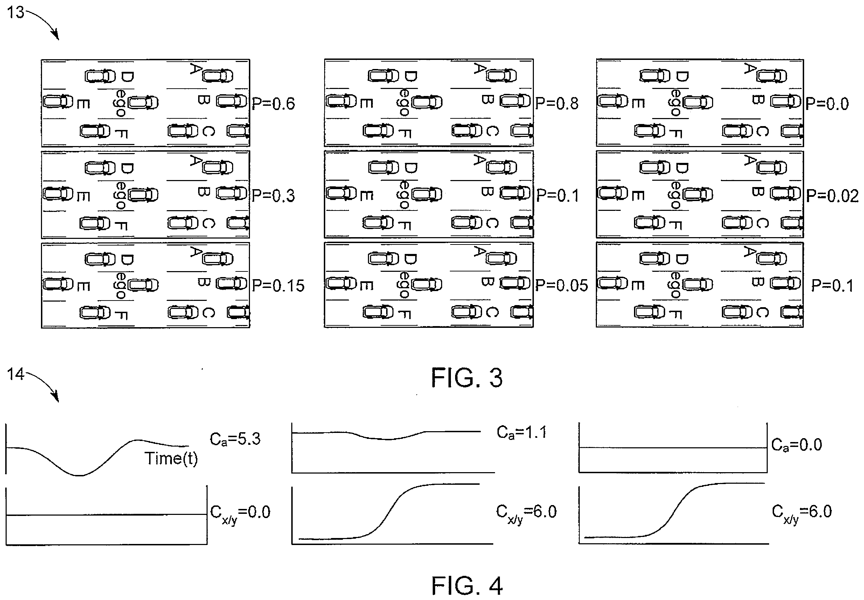

Coming now to figure 3 examples for predicted future situations will be explained. The examples shows a top view of a road comprising three lanes with the ego-vehicle driving on the center lane, having as a predecessor vehicle B and as a successor vehicle E. On the right lane there are vehicles C and F. On the left lane there are vehicles A and D.

When looking at the first row of a current situation as depicted in figure 3 it becomes evident that the probability of predicted future situation depends on an assumed behavior of the ego-vehicle. In the left column it is assumed that the ego-vehicle drives straight. In the center column it is assumed that the ego-vehicle changes lane to its left neighboring lane. In the right column on the other side it is assumed that the ego-vehicle changes lane to its right neighboring lane. Because the gap on the left of vehicle C would be much larger/less critical in case that the ego-vehicle leaves the center lane, the respective situation probability is highest.

It is also illustrated in figure 3 that certain behaviors of other vehicles are only relevant for certain ego-vehicle behaviors, for example a cut-out behavior of vehicle A to its left only influences the ego-vehicle if it intended to change lane to the left. This is depicted in the center row, center column.

Further, as it is shown in the center column, lower row, situations with multiple vehicles changing their behavior have a combined probability of each behavior change to occur. Finally it is to be noted that always the probability of a future situation in which no changes occur shall be computed. The situation is shown in the left column, center row.

We compute for some of the given situations including an ego-vehicle behavior an optimized trajectory both for longitudinal and lateral motion. This is shown in figure 4. The longitudinal motion is shown in the upper row and the lateral motion is illustrated in the lower row.

In the left column, the situation involves vehicle C cutting into the lane of the ego-vehicle from the right and the ego-vehicle is driving straight. In such a case a good trajectory would involve slowing down to keep a large enough gap and no lateral motion. The upper diagram of the left column shows this deceleration, followed by taking up speed again after the gap was re-established. Here, the longitudinal trajectory would introduce a certain amount of cost, e.g. you to the breaking maneuver, whereas the lateral motion would have no cost.

Moving now on to the column in the middle, the situation involves vehicle C cutting into the lane again but the ego-vehicle is giving way by performing a lane change to its left neighboring lane. For such a situation the optimized trajectory would involve only slowing down a little and performing a smooth lateral motion to left neighboring lane. The longitudinal trajectory would thus introduce only a small amount of cost, e.g. due to the modest deceleration, whereas the lateral motion would e.g. involve cost for lateral acceleration due to the lane change. Additionally the lateral motion would also cause cost for the gap to vehicle D, which could come close to the ego-vehicle.

Finally a good trajectory for the situation depicted in figure 3 in which the ego-vehicle overtakes vehicle B, while vehicle A also changes lane, center column, center row, would involve constant speed and smooth lateral motion to the other lane. Obviously, the cost for the constant speed is zero, but the lateral motion involves considerable cost, cost by the lateral motion itself, but also for the gap to vehicle D, which would come close to the ego-vehicle.

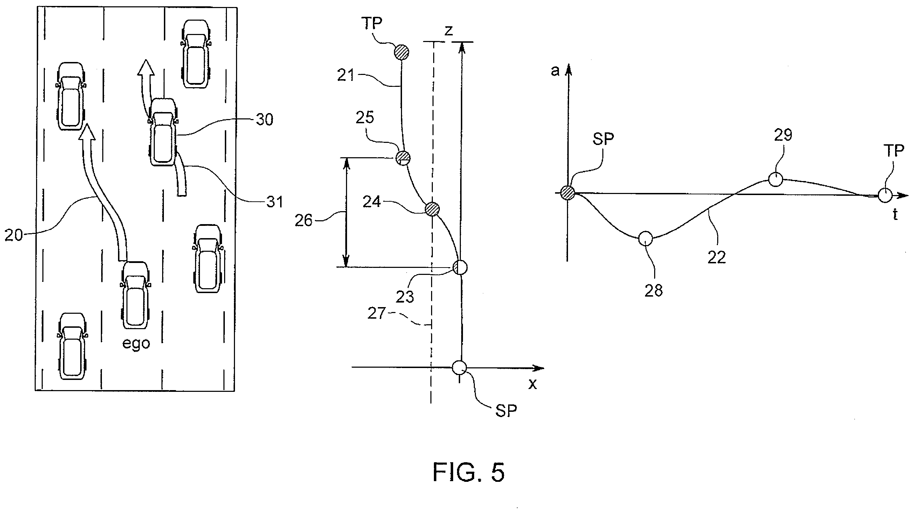

In figure 5 on the left side there is shown a traffic situation where the ego-vehicle drives on the center lane. A trajectory for a lane-change of the ego-vehicle to the left neighboring lane in a given situation including the ego-vehicle behavior shall be optimized. The trajectory to be optimized is shown by the arrow 20. The two diagrams on the right of figure 5 show two polynomial functions 21 and 22, one function 22 for longitudinal acceleration and one function 21 for the lateral position in the lane. These two polynomial functions 21, 22 represent the trajectory of the ego-vehicle. The shape of the two polynomial functions 21, 22 is defined through positions of certain control points. All the control points lie between a start point SP and a target point TP of the spline which define beginning and ending of an ego-vehicle's behavior. For the position within the lane of the ego-vehicle three control points 23. 24 and 25 are shown in the diagram: the first control point 23 defines the start of the lateral motion of the ego-vehicle, the second control point 24 identifies the position where the lane-marking 27 is crossed and finally the third control point 25 identifies the end of the lateral motion of the ego-vehicle.

A span 26 of the entire lateral motion that is executed during the lane change is thus identified by the distance 26 between the first control point 23 and the third control point 25 for the position in the lane. On the other side, at the very right of figure 5, the acceleration in the longitudinal direction is represented by a spline that is defined by only two control points 28 and 29 identifying the maximum deceleration and maximum acceleration.

Since the two polynomial functions 21, 22 that are illustrated represent the trajectory, it is obvious that changing the control points 23, 24, 25, 28 and 29 finally results in a change of the trajectory of the ego-vehicle. For every trajectory, the overall cost is determined which results from a number of different cost-terms. Such cost terms may be for example maximum acceleration or the minimum time-to-collision of the ego-vehicle to the vehicle which is the predicted vehicle 30 in figure 5 and for which its predicted behavior is indicated by the arrow 31 representing a lane-change from the right neighboring lane to the center lane. In the optimization process the control points 23, 24, 25, 28 and 29 for the ego-vehicle trajectory are moved until a minimum for the resulting overall cost is achieved. After an optimized set of the five control 23, 24, 25, 28 and 29 points is found, the corresponding splines define the optimized trajectory of the ego-vehicle.

It is obvious that a number of control points is not limited to five. The five control points 23, 24, 25, 28 and 29 shown in figure 5 are only used to illustrate and explain the steps for optimizing the trajectory in the exemplary traffic situation shown on the left of figure 5 using control points.

## Claims

1. Method for assisting an operator of an ego-vehicle in controlling the ego-vehicle by determining a future behavior and an associated trajectory for the ego-vehicle to be executed, comprising the following method steps:
- determining (S1) a situation currently encountered by the ego-vehicle to obtain, for the current situation comprising the ego-vehicle and at least one other vehicle, a description of a state of a local traffic environment covering existence, position, lane and speed of the ego-vehicle and the at least one other vehicle,
- determining (S3) different future behaviors of the ego-vehicle that could be performed for the current situation based on the description, wherein the future behaviors of the ego-vehicle are at least two of: lane change to the left, lane change to the right and lane following,
- predicting (S4) future behaviors of the at least one other vehicle by computing probabilities of future behaviors of the at least one other vehicle based on the current situation, wherein the computation of the probabilities of the future behaviors of the at least one other vehicle (S4) is performed once with the assumption of each possible future behavior of the ego-vehicle,
- computing (S5) probabilities of a plurality of future situations possibly evolving from the current situation based on combinations of the predicted future behaviors of the at least one other vehicle and the determined different future behaviors of the ego-vehicle, wherein each future situation corresponds to the state of the local traffic environment covering the existence, the position, the lane and the speed of the ego-vehicle and the at least one other vehicle, after each of the ego-vehicle and the at least one other vehicle performed its behaviour,
- optimizing (S6), for each future situation, with respect to driving parameters related to safety and comfort, a trajectory for the ego-vehicle to generate a plurality of optimized trajectories,
- selecting (S7) a trajectory from the plurality of optimized trajectories based on the future situation probabilities and an evaluation of the plurality of optimized trajectories, and
- generating (S8) a control signal to inform the driver about the selected trajectory and/or to control actuators of the ego-vehicle so that the ego-vehicle follows the selected trajectory.

2. Method according to claim 1,
**characterized in that**
the computation of the probabilities of future behaviors of the at least one other vehicle (S4) takes into account potential future changes of the behavior of its surrounding vehicles.

3. Method according to claim 1 or 2,
**characterized in that**
the computation of the probabilities of the future behaviors of the at least one other vehicle (S4) is done by changing the current situation for its surrounding vehicles in a way that simulates the execution of the possible behaviors by its surrounding vehicles.

4. Method according to any one of the preceding claims,
**characterized in that**
the predicted behavior of the at least one other vehicle is one of: lane change to the left, lane change to the right, driving straight, braking, accelerating.

5. Method according to any one of the preceding claims,
**characterized in that**
each future situation that is constructed (S5) corresponds to a unique combination of future behaviors of the other vehicles and one of the potential future behaviors of the ego-vehicle.

6. Method according to any one of claims 1 to 4,
**characterized in that**
in the combinations, related future behaviors of other vehicles in the vicinity of the ego-vehicle are combined with each other and with future behaviors of the ego-vehicle.

7. Method according to claim 5 or 6,
**characterized in that**
only behaviors of the other vehicles and/or the ego-vehicle are considered for construction of the future situations (S6), that are applicable in the current situation and that comply with applicable traffic rules.

8. Method according to any one of the preceding claims
**characterized in that**
in the combinations, each future behaviour of the ego-vehicle is combined only with predicted behaviors of other vehicles in the vicinity of the ego-vehicle.

9. Method according to any one of the preceding claims,
**characterized in that**
the probability for a future situation is computed by multiplying the probabilities and/or conditional probabilities of the associated future behaviors of every vehicle.

10. Method according to any one of the preceding claims,
**characterized in that**
future situations that only differ in states of vehicles that do not influence the related ego-vehicle behavior are fused be further processed as one single future situation.

11. Method according to any one of the preceding claims,
**characterized in that**
a parameter space of parameters defining possible trajectories which implement the situation-associated ego-vehicle behaviour is evaluated and a trajectory that results in minimum cost or maximum quality is selected as optimized trajectory.

12. Method according to claim 11,
**characterized in that**
the trajectories are represented as piecewise linear representations, polynomials of third or higher order, splines based on third order polynomials or higher, for example C2-splines, B-splines.

13. Method according to claim 11 or 12,
**characterized in that**
the cost of the ego-vehicle's trajectory is defined by a combination of cost-terms influenced by control points that represent parameters to be optimized and that lie between a start point (SP) and a target point (TP) of spline which define beginning and ending of an ego-vehicle's behavior, wherein
the cost-terms take at least one of the following aspects at a given time or is combination of its values over the trajectory duration into account:
headway to other vehicles with respect to a selected set-headway ego-vehicle velocity with respect to a selected set-speed maximum or minimum acceleration
jerk, which is a derivative of acceleration with respect to time
required reaction of other vehicles with respect to the ego-vehicle's trajectory
timing of the lane-change.

14. Method according to any one of the preceding claims,
**characterized in that**
the optimization of the trajectories is done only within predefined limits for the trajectory parameters.

15. Method according to any one of the preceding claims,
**characterized in that**
the trajectories are optimized by determining values for control points which, lie between a start point (SP) and a target point (TP) of a spline, which define beginning and ending of an ego-vehicle's behaviour, and lead to minimum cost using an optimization algorithm, which preferably is a derivative-free gradient descent method.

16. Method according to any one of the preceding claims,
**characterized in that**
the optimization process for determining an optimized trajectory is sequentially done for each situation according to a predefined order of the situations until a stop criterion is reached.

17. Method according to any one of the preceding claims,
**characterized in that**
selection of a trajectory and a respective behaviour is based on at least two of: future situation probability, trajectory cost, traffic rules and driver preferences.

18. Method according to any one of the preceding claims,
**characterized in that**
the control signal is output only if the selected trajectory and associated behavior has cost not exceeding a threshold and/or the selected trajectory and associated behaviour lie within given constraints.

19. Vehicle including at least one sensor for sensing an environment of the vehicle and a processor configured to carry out the method steps according to any one of claims 1 to 18, wherein the control signal is output to a human machine interface for communicating the selected behaviour and associated trajectory to the vehicle operator and/or to one or more controllers of vehicle actuators to operate the vehicle to follow the selected trajectory.

## Patentansprüche

1. Verfahren zur Unterstützung eines Bedieners eines Ego-Fahrzeugs bei der Steuerung des Ego-Fahrzeugs durch Bestimmen eines zukünftigen Verhaltens und einer zugehörigen auszuführenden Trajektorie für das Ego-Fahrzeug, aufweisend die folgenden Verfahrensschritte:
- Ermitteln (S1) einer aktuellen Situation, in der sich das Ego-Fahrzeug befindet, um für die aktuelle Situation, die das Ego-Fahrzeug und mindestens ein anderes Fahrzeug umfasst, eine Zustandsbeschreibung einer lokalen Verkehrsumgebung zu erhalten, welche Existenz, Position, Fahrspur sowie Geschwindigkeit des Ego-Fahrzeugs und des mindestens einen anderen Fahrzeugs berücksichtigt,
- Bestimmen (S3) verschiedener zukünftiger Verhaltensweisen des Ego-Fahrzeugs, die auf der Grundlage der Beschreibung für die aktuelle Situation durchgeführt werden könnten, wobei die zukünftigen Verhaltensweisen des Ego-Fahrzeugs zumindest zwei der folgenden Vorgänge darstellen: Spurwechsel nach links, Spurwechsel nach rechts und Spurfolge,
- Vorhersagen (S4) zukünftiger Verhaltensweisen des mindestens einen anderen Fahrzeugs durch Berechnen von Wahrscheinlichkeiten zukünftiger Verhaltensweisen des mindestens einen anderen Fahrzeugs auf der Grundlage der aktuellen Situation, wobei das Berechnen der Wahrscheinlichkeiten der zukünftigen Verhaltensweisen des mindestens einen anderen Fahrzeugs (S4), unter Annahme jedes möglichen zukünftigen Verhaltens des Ego-Fahrzeugs, einmal durchgeführt wird,
- Berechnen (S5) von Wahrscheinlichkeiten einer Mehrzahl an zukünftigen, sich möglicherweise aus der aktuellen Situation entwickelnden Situationen, auf der Grundlage von Kombinationen der vorhergesagten zukünftigen Verhaltensweisen des mindestens einen anderen Fahrzeugs und der ermittelten unterschiedlichen zukünftigen Verhaltensweisen des Ego-Fahrzeugs, wobei jede zukünftige Situation dem Zustand der lokalen Verkehrsumgebung entspricht, welcher die Existenz, die Position, die Fahrspur und die Geschwindigkeit des Ego-Fahrzeugs und des mindestens einen anderen Fahrzeugs berücksichtigt, nachdem sowohl das Ego-Fahrzeug als auch das mindestens eine andere Fahrzeug sein Verhalten ausgeführt hat,
- Optimieren (S6) einer Trajektorie für das Ego-Fahrzeug für jede zukünftige Situation im Hinblick auf sich auf Sicherheit und Komfort beziehende Fahrparameter, um eine Mehrzahl an optimierten Trajektorien zu erzeugen,
- Auswählen (S7) einer Trajektorie aus der Mehrzahl an optimierten Trajektorien auf der Grundlage der Wahrscheinlichkeiten der zukünftigen Situation und einer Bewertung der Mehrzahl an optimierten Trajektorien, und
- Erzeugen (S8) eines Steuersignals, um den Fahrer über die ausgewählte Trajektorie zu informieren und/oder um Aktuatoren des Ego-Fahrzeugs so zu steuern, dass das Ego-Fahrzeug der ausgewählten Trajektorie folgt.

2. Verfahren nach Anspruch 1,
**dadurch gekennzeichnet, dass**
die Berechnung der Wahrscheinlichkeiten zukünftiger Verhaltensweisen des mindestens einen anderen Fahrzeugs (S4) mögliche zukünftige Änderungen des Verhaltens seiner umgebenden Fahrzeuge berücksichtigt.

3. Verfahren nach Anspruch 1 oder 2,
**dadurch gekennzeichnet, dass**
die Berechnung der Wahrscheinlichkeiten der zukünftigen Verhaltensweisen des mindestens einen anderen Fahrzeugs (S4) so erfolgt, dass durch Simulation der Ausführung der möglichen Verhaltensweisen seiner umgebenden Fahrzeuge die aktuelle Situation für seine umgebenden Fahrzeuge verändert wird.

4. Verfahren nach einem der vorherigen Ansprüche,
**dadurch gekennzeichnet, dass**
das vorhergesagte Verhalten des mindestens einen anderen Fahrzeugs eines der folgenden ist: Spurwechsel nach links, Spurwechsel nach rechts, Geradeausfahren, Bremsen, Beschleunigen.

5. Verfahren nach einem der vorherigen Ansprüche,
**dadurch gekennzeichnet, dass**
jede zukünftige Situation, die konstruiert wird (S5), einer eindeutigen Kombination von zukünftigen Verhaltensweisen der anderen Fahrzeuge und einer der möglichen zukünftigen Verhaltensweisen des Ego-Fahrzeugs entspricht.

6. Verfahren nach einem der Ansprüche 1 bis 4,
**dadurch gekennzeichnet, dass**
in den Kombinationen aufeinander bezogener zukünftige Verhaltensweisen anderer Fahrzeuge in der Nähe des Ego-Fahrzeugs miteinander und mit zukünftigen Verhaltensweisen des Ego-Fahrzeugs kombiniert werden.

7. Verfahren nach Anspruch 5 oder 6,
**dadurch gekennzeichnet, dass**
für die Konstruktion der zukünftigen Situationen (S6) nur Verhaltensweisen der anderen Fahrzeuge und/oder des Ego-Fahrzeugs berücksichtigt werden, die in der aktuellen Situation anwendbar sind und die den geltenden Verkehrsregeln entsprechen.

8. Verfahren nach einem der vorherigen Ansprüche
**dadurch gekennzeichnet, dass**
in den Kombinationen jedes zukünftige Verhalten des Ego-Fahrzeugs nur mit vorhergesagten Verhaltensweisen anderer Fahrzeuge in der Nähe des Ego-Fahrzeugs kombiniert wird.

9. Verfahren nach einem der vorherigen Ansprüche,
**dadurch gekennzeichnet, dass**
die Wahrscheinlichkeit für eine zukünftige Situation durch Multiplikation der Wahrscheinlichkeiten und/oder bedingten Wahrscheinlichkeiten der zugehörigen zukünftigen Verhaltensweisen eines jeden Fahrzeugs berechnet wird.

10. Verfahren nach einem der vorherigen Ansprüche,
**dadurch gekennzeichnet, dass**
zukünftige Situationen, die sich nur in Zuständen von Fahrzeugen unterscheiden, die das zugehörige Ego-Fahrzeug-Verhalten nicht beeinflussen, zu einer einzigen zukünftigen Situation fusioniert und weiterverarbeitet werden.

11. Verfahren nach einem der vorherigen Ansprüche,
**dadurch gekennzeichnet, dass**
ein Parameterraum von Parametern, welche mögliche, das situationsbedingte Ego-Fahrzeug-Verhalten realisierende Trajektorien definieren, ausgewertet wird und eine zu minimalen Kosten oder maximaler Qualität führende Trajektorie als optimierte Trajektorie ausgewählt wird.

12. Verfahren nach Anspruch 11,
**dadurch gekennzeichnet, dass**
die Trajektorien als stückweise lineare Darstellungen, Polynome dritter oder höherer Ordnung, Splines auf der Grundlage von Polynomen dritter oder höherer Ordnung, z.B. C2-Splines, B-Splines, dargestellt werden.

13. Verfahren nach Anspruch 11 oder 12,
**dadurch gekennzeichnet, dass**
die Kosten der Trajektorie des Ego-Fahrzeugs durch eine Kombination von Kosten-Termen definiert werden, die durch Kontrollpunkte beeinflusst werden, welche zu optimierende Parameter darstellen, und welche zwischen einem den Beginn und das Ende des Verhaltens eines Ego-Fahrzeugs definierenden Startpunkt (SP) und Zielpunkt (TP) eines Splines liegen, wobei
die Kosten-Terme zumindest einen der folgenden Aspekte zu einem bestimmten Zeitpunkt oder eine Kombination seiner Werte über die Dauer der Trajektorie berücksichtigen:
Abstand zu anderen Fahrzeugen in Bezug auf einen gewählten Soll-Abstand;
Geschwindigkeit des Ego-Fahrzeugs in Bezug auf eine gewählte Soll-Geschwindigkeit;
maximale oder minimale Beschleunigung;
Ruck, der eine zeitliche Ableitung der Beschleunigung darstellt;
erforderliche Reaktion der anderen Fahrzeuge hinsichtlich der Trajektorie des Ego-Fahrzeugs;
Zeitpunkt des Fahrspurwechsels.

14. Verfahren nach einem der vorherigen Ansprüche,
**dadurch gekennzeichnet, dass**
die Optimierung der Trajektorien nur innerhalb vorgegebener Grenzen für die Trajektorienparameter durchgeführt wird.

15. Verfahren nach einem der vorherigen Ansprüche,
**dadurch gekennzeichnet, dass**
die Trajektorien unter Verwendung eines vorzugsweise ein ableitungsfreies Gradienten-Abstiegsverfahren darstellenden Optimierungsalgorithmus optimiert werden, indem für Kontrollpunkte, die zwischen einem Startpunkt (SP) und einem Zielpunkt (TP) eines Splines liegen, welche Anfang und Ende des Verhaltens eines Ego-Fahrzeugs definieren, Werte bestimmt werden, die zu minimalen Kosten führen.

16. Verfahren nach einem der vorherigen Ansprüche,
**dadurch gekennzeichnet, dass**
der Optimierungsprozess zur Bestimmung einer optimierten Trajektorie, gemäß einer vordefinierten Reihenfolge der Situationen, für jede Situation sequentiell durchgeführt wird, bis ein Stoppkriterium erreicht ist.

17. Verfahren nach einem der vorherigen Ansprüche,
**dadurch gekennzeichnet, dass**
die Auswahl einer Trajektorie und eines entsprechenden Verhaltens auf zumindest zwei der folgenden Kriterien beruht: Wahrscheinlichkeit der zukünftigen Situation, Trajektorien-Kosten, Verkehrsregeln und Präferenzen des Fahrers.

18. Verfahren nach einem der vorherigen Ansprüche,
**dadurch gekennzeichnet, dass**
das Steuersignal nur dann ausgegeben wird, wenn die ausgewählte Trajektorie und das zugehörige Verhalten zu Kosten führen, die einen Schwellenwert nicht überschreiten, und/oder wenn die ausgewählte Trajektorie und das zugehörige Verhalten innerhalb gegebener Beschränkungen liegen.

19. Fahrzeug mit zumindest einem Sensor, zum Erfassen einer Umgebung des Fahrzeugs, und einem Prozessor, der so ausgebildet ist, dass er die Verfahrensschritte nach einem der Ansprüche 1 bis 18 durchführt, wobei das Steuersignal an eine Mensch-Maschine-Schnittstelle ausgegeben wird, um das ausgewählte Verhalten und die zugehörige Trajektorie dem Fahrzeugführer und/oder einer oder mehreren Steuerungen von Fahrzeugaktuatoren mitzuteilen, damit das Fahrzeug der ausgewählten Trajektorie folgt.

## Revendications

1. Procédé pour aider un opérateur d'un égo-véhicule lors de la commande de l'égo-véhicule par détermination d'un comportement futur et d'une trajectoire associée pour l'égo-véhicule à exécuter, comprenant les étapes de procédé suivantes :
- la détermination (S1) d'une situation actuellement rencontrée par l'égo-véhicule pour obtenir, pour la situation actuelle comprenant l'égo-véhicule et au moins un autre véhicule, une description d'un état d'un environnement de circulation local couvrant l'existence, la position, la voie et la vitesse de l'égo-véhicule et de l'au moins un autre véhicule,
- la détermination (S3) de différents comportements futurs de l'égo-véhicule qui pourraient être réalisés pour la situation actuelle sur la base de la description, dans lequel les comportements futurs de l'égo-véhicule sont au moins deux de : changement de voie vers la gauche, changement de voie vers la droite et suivi de voie,
- la prédiction (S4) de comportements futurs de l'au moins un autre véhicule par calcul de probabilités de comportements futurs de l'au moins un autre véhicule sur la base de la situation actuelle, dans lequel le calcul des probabilités des comportements futurs de l'au moins un autre véhicule (S4) est réalisé une fois avec l'hypothèse de chaque comportement futur possible de l'égo-véhicule,
- le calcul (S5) de probabilités d'une pluralité de situations futures évoluant éventuellement à partir de la situation actuelle sur la base de combinaisons des comportements futurs prédits de l'au moins un autre véhicule et des comportements futurs différents déterminés de l'égo-véhicule, dans lequel chaque situation future correspond à l'état de l'environnement de circulation local couvrant l'existence, la position, la voie et la vitesse de l'égo-véhicule et de l'au moins un autre véhicule, après que chacun de l'égo-véhicule et de l'au moins un autre véhicule a réalisé son comportement,
- l'optimisation (S6), pour chaque situation future, par rapport aux paramètres de conduites liés à la sécurité et au confort, d'une trajectoire pour l'égo-véhicule pour générer une pluralité de trajectoires optimisées,
- la sélection (S7) d'une trajectoire parmi la pluralité de trajectoires optimisées sur la base des probabilités de situation future et d'une évaluation de la pluralité de trajectoires optimisées, et
- la génération (S8) d'un signal de contrôle pour informer le conducteur de la trajectoire sélectionnée et/ou pour contrôler les actionneurs de l'égo-véhicule de sorte que l'égo-véhicule suit la trajectoire sélectionnée.

2. Procédé selon la revendication 1,
**caractérisé en ce que**
le calcul des probabilités de comportements futurs de l'au moins un autre véhicule (S4) prend en compte les changements futurs potentiels du comportement de ses véhicules environnants.

3. Procédé selon la revendication 1 ou 2,
**caractérisé en ce que**
le calcul des probabilités des comportements futurs de l'au moins un autre véhicule (S4) est réalisé par changement de la situation actuelle pour ses véhicules environnants d'une manière qui simule l'exécution des comportements possibles par ses véhicules environnants.

4. Procédé selon l'une quelconque des revendications précédentes,
**caractérisé en ce que**
le comportement prédit de l'au moins un autre véhicule est un de : changement de voie vers la gauche, changement de voie vers la droite, conduite en ligne droite, freinage, accélération.

5. Procédé selon l'une quelconque des revendications précédentes,
**caractérisé en ce que**
chaque situation future qui est construite (S5) correspond à une combinaison unique de comportements futurs des autres véhicules et d'un des comportements futurs potentiels de l'égo-véhicule.

6. Procédé selon l'une quelconque des revendications 1 à 4,
**caractérisé en ce que**
dans les combinaisons, les comportements futurs liés d'autres véhicules au voisinage de l'égo-véhicule sont combinés les uns aux autres et aux comportements futurs de l'égo-véhicule.

7. Procédé selon la revendication 5 ou 6,
**caractérisé en ce que**
seuls les comportements des autres véhicules et/ou de l'égo-véhicule sont envisagés pour la construction des situations futures (S6), qui sont applicables dans la situation actuelle et qui sont conformes aux règles de circulation.

8. Procédé selon l'une quelconque des revendications précédentes,
**caractérisé en ce que**
dans les combinaisons, chaque comportement futur de l'égo-véhicule est combiné uniquement à des comportements prédits d'autres véhicules au voisinage de l'égo-véhicule.

9. Procédé selon l'une quelconque des revendications précédentes,
**caractérisé en ce que**
la probabilité pour une situation future est calculée par multiplication des probabilités et/ou probabilités conditionnelles des comportements futurs associés de tout véhicule.

10. Procédé selon l'une quelconque des revendications précédentes,
**caractérisé en ce que**
des situations futures qui diffèrent uniquement sur les états de véhicules qui n'influencent pas le comportement de l'égo-véhicule lié sont fusionnées pour être traitées par la suite comme une situation future unique.

11. Procédé selon l'une quelconque des revendications précédentes,
**caractérisé en ce que**
un espace de paramètre de paramètres définissant des trajectoires possibles qui mettent en oeuvre le comportement de l'égo-véhicule associé à la situation est évalué et une trajectoire qui résulte d'un coût minimal ou d'une qualité maximale est sélectionnée comme trajectoire optimisée.

12. Procédé selon la revendication 11,
**caractérisé en ce que**
les trajectoires sont représentées comme des représentations linéaires par morceaux, des polynômes de troisième ordre ou plus, des splines basés sur des polynômes de troisième ordre ou plus, par exemple les C2-splines, B-splines.

13. Procédé selon la revendication 11 ou 12,
**caractérisé en ce que**
le coût de la trajectoire de l'égo-véhicule est défini par une combinaison de termes de coût influencés par des points de contrôle qui représentent des paramètres à optimiser et qui se situent entre un point de départ (SP) et un point cible (TP) de spline qui définissent le début et la fin d'un comportement de l'égo-véhicule, dans lequel les termes de coût prennent en compte au moins l'un des aspects suivants à un moment donné ou est une combinaison de ses valeurs sur la durée de la trajectoire :
espacement par rapport aux autres véhicules par rapport à un espacement défini sélectionné
vélocité de l'égo-véhicule par rapport à une vitesse définie sélectionnée accélération maximale ou minimale
saccade, qui est une dérivée de l'accélération par rapport au temps
réaction requise d'autres véhicules par rapport à la trajectoire de l'égo-véhicule
moment du changement de voie.

14. Procédé selon l'une quelconque des revendications précédentes,
**caractérisé en ce que**
l'optimisation des trajectoires est réalisée uniquement dans des limites prédéfinies pour les paramètres de trajectoire.

15. Procédé selon l'une quelconque des revendications précédentes,
**caractérisé en ce que**
les trajectoires sont optimisées par détermination de valeurs pour les points de contrôle qui se situent entre un point de départ (SP) et un point cible (TP) d'un spline, qui définissent le début et la fin d'un comportement de l'égo-véhicule, et entraînent un coût minimal au moyen d'un algorithme d'optimisation, qui de préférence est un procédé de descente de gradient sans dérivée.

16. Procédé selon l'une quelconque des revendications précédentes,
**caractérisé en ce que**
le processus d'optimisation pour déterminer une trajectoire optimisée est réalisé de manière séquentielle pour chaque situation selon un ordre prédéfini des situations jusqu'à ce qu'un critère d'arrêt soit atteint.

17. Procédé selon l'une quelconque des revendications précédentes,
**caractérisé en ce que**
la sélection d'une trajectoire et d'un comportement respectif est basée sur au moins deux de : la probabilité de situation future, le coût de la trajectoire, les règles de circulation et les préférences du conducteur.

18. Procédé selon l'une quelconque des revendications précédentes,
**caractérisé en ce que**
le signal de contrôle est émis uniquement si la trajectoire sélectionnée et le comportement associé ne présente pas un coût dépassant un seuil et/ou la trajectoire sélectionnée et le comportement associé se situent dans des contraintes données.

19. Véhicule comportant au moins un capteur pour détecter un environnement du véhicule et un processeur configuré pour mettre en oeuvre les étapes de procédé selon l'une quelconque des revendications 1 à 18, dans lequel le signal de contrôle est délivré à une interface homme machine pour communiquer le comportement sélectionné et la trajectoire associée à l'opérateur du véhicule et/ou à un ou plusieurs contrôleurs d'actionneurs de véhicule pour faire fonctionner le véhicule pour qu'il suive la trajectoire sélectionnée.
